# DEMANDE DE BREVET EUROPEEN

(11) **EP 1 304 268 A1**
(43) Date de publication de la demande: **23.04.2003**
(21) Numéro de dépôt: 02292584.6
(22) Date de dépôt: 18.10.2002
(51) Int. Cl.: B60R 21/26, G06K 19/07

(54) **Générateur de gaz hybride pour un airbag**

(30) Priorité: 19.10.2001 FR 0113490
(71) Demandeur: Livbag S.N.C., 75017 Paris (FR)
(72) Inventeur: Lebaudy, Franck, 29470 Loperhet (FR); Peremarty, Francois, 29000 Quimper (FR); Perotto, Christian, 29500 Ergue Gaberic (FR)
(74) Mandataire: Le Faou, Daniel

(57) **Abrégé**

La présente invention se rapporte à un dispositif (1) générateur de gaz hybride utilisé pour gonfler au moins un coussin de protection latéral, caractérisé en ce qu'il comprend :
- un élément flexible (9) contenant un chargement pyrotechnique (10) et possédant une extrémité amont (13) et une extrémité aval,
- un réservoir (18) de gaz (19) sous pression présentant une extrémité amont et une extrémité aval (30),
- un allumeur (3) électro-pyrotechnique logé dans un corps (2) au voisinage de l'extrémité amont (13) de l'élément flexible et de l'extrémité aval (30) du réservoir,
- ledit allumeur étant apte en fonctionnement à provoquer, d'une part, l'initiation en combustion du chargement pyrotechnique contenu dans l'élément flexible, et d'autre part, la libération du gaz sous pression contenu dans le réservoir.

## Description

La présente invention se rapporte au domaine de la sécurité automobile et concerne un dispositif générateur de gaz hybride.

Ces dernières années, de nouveaux générateurs, dits adaptatifs, sont apparus afin de limiter les risques d'accidents corporels occasionnés par le déploiement du coussin de protection. Pour cela, ces différents générateurs, couplés à des systèmes de détection appropriés, permettent de moduler le débit et/ou le volume de gaz en fonction de certains paramètres comme par exemple la morphologie et le positionnement du passager, la température ambiante, la nature et l'intensité du choc. Ces générateurs sont dans tous les cas prévus pour fonctionner dans une période de temps de l'ordre de cinquante millisecondes.

Très récemment, les constructeurs automobiles ont souhaité incorporer des dispositifs utilisant des coussins de protection gonflables pour protéger les occupants, non seulement lorsque le véhicule subit un choc latéral, mais aussi lorsque le véhicule subit des tonneaux à la suite du choc latéral. Pour cela, les coussins doivent rester gonflés durant une période de temps de l'ordre d'une dizaine de secondes. Le brevet US 5,967,550 décrit un générateur doté de deux chargements pyrotechniques, le premier servant à gonfler le coussin de protection dans les millisecondes qui suivent l'accident, et le second permettant de maintenir le coussin gonflé durant une dizaine de secondes. Néanmoins, compte tenu de la géométrie particulière de ce générateur, ce dernier ne peut pas être facilement intégré dans tous les véhicules automobiles.

Il a alors été proposé, comme dans la demande de brevet WO 01/34516, un dispositif comprenant, d'une part, un corps principal contenant un allumeur électro-pyrotechnique et un premier chargement pyrotechnique, et d'autre part, un tube rattaché au corps principal et contenant un second chargement pyrotechnique constitué par des grains de poudre. Ce dispositif présente l'avantage, par rapport au générateur précédemment cité, de posséder un corps principal de faible encombrement associé à un tube pouvant facilement se loger le long du toit du véhicule. Néanmoins, compte tenu de l'utilisation de deux chargements pyrotechniques distincts, le coût de fabrication d'un tel dispositif est relativement élevé, ce qui est préjudiciable dans un marché concurrentiel comme celui de l'industrie automobile. De plus, l'utilisation d'un chargement pyrotechnique sous la forme de grains de poudre dans le tube est pénalisante car, en fonctionnement, on retrouve des particules très chaudes dans le coussin de protection pouvant entraîner une dégradation prématurée de celui-ci. Par ailleurs, l'utilisation d'un chargement pyrotechnique pour générer du gaz durant une période d'une dizaine de secondes a pour effet que la surface du dispositif est maintenue à une température de l'ordre de plusieurs centaines de degrés Celsius durant ce laps de temps. Ceci peut être néfaste pour le coussin de protection ou encore pour l'habillage du véhicule qui se trouve à proximité du dispositif.

L'homme du métier est donc toujours à la recherche d'un dispositif permettant de pallier les problèmes précédemment évoqués.

L'objet de la présente invention concerne un dispositif générateur de gaz hybride utilisé en sécurité automobile pour gonfler au moins un coussin de protection latéral, caractérisé en ce qu'il comprend :
- un élément flexible contenant un chargement pyrotechnique et possédant une extrémité amont et une extrémité aval,
- un réservoir de gaz sous pression présentant une extrémité amont et une extrémité aval,
- un allumeur électro-pyrotechnique logé dans un corps situé au voisinage de l'extrémité amont de l'élément flexible et de l'extrémité aval du réservoir,
- ledit allumeur étant apte en fonctionnement à provoquer, d'une part, l'initiation en combustion du chargement pyrotechnique contenu dans l'élément flexible, et d'autre part, la libération du gaz sous pression contenu dans le réservoir.

Ce dispositif, outre le fait de posséder une géométrie lui permettant d'être intégré dans toutes sortes de véhicules automobiles, présente donc un coût de fabrication fortement réduit compte tenu de l'utilisation d'un réservoir de gaz sous pression en lieu et place d'un chargement pyrotechnique.

Préférentiellement, le chargement pyrotechnique contenu dans l'élément flexible est apte à générer un volume de gaz suffisant pour totalement gonfler le coussin de protection dans une période de temps inférieure à quarante millisecondes. Par ailleurs, en fonctionnement, le gaz sous pression contenu dans le réservoir est libéré de façon à maintenir le coussin de protection gonflé durant une période de temps de l'ordre de plusieurs secondes. Ce gaz sous pression n'est régulièrement libéré qu'à compter du moment où le coussin de protection est déjà totalement gonflé par suite de la combustion du chargement pyrotechnique.

Avantageusement, le chargement pyrotechnique contenu dans l'élément flexible est réalisé sous la forme d'un bloc cylindrique qui, d'une part, possède préférentiellement une longueur très supérieure à son diamètre, et d'autre part, est muni d'un canal central. Avantageusement encore, ce chargement pyrotechnique est constitué par un propergol composite comprenant une charge à base de perchlorate d'ammonium et de nitrate de sodium et un liant inerte.

Préférentiellement, une gaine souple thermorétractée enserre et confine le chargement pyrotechnique contenu dans l'élément flexible.

De façon avantageuse, l'allumeur électro-pyrotechnique provoque, d'une part, l'initiation en combustion du chargement pyrotechnique contenu dans l'élément flexible, et d'autre part, la libération du gaz sous pression contenu dans le réservoir, au moyen de charges relais.

Préférentiellement, l'extrémité amont de l'élément flexible et l'extrémité aval du réservoir sont rattachées à une bague elle-même fixée dans le corps.

Préférentiellement encore, ce dispositif est conçu pour que, après combustion du chargement pyrotechnique, le gaz s'échappe du réservoir pour traverser le corps puis parte en un sens sensiblement opposé pour traverser l'élément flexible.

Avantageusement encore, l'élément flexible est réalisé à l'aide d'un tube souple en matériau thermoplastique muni d'orifices de sortie régulièrement répartis sur sa circonférence et sur sa longueur. Le chargement pyrotechnique étant logé dans le tube, il suffit donc d'adapter la longueur de ce tube à la taille du coussin de protection retenu. De plus, le choix d'un tel matériau pour former le tube permet de conférer une sécurité supplémentaire au dispositif car, en cas de surpression anormale, toute projection de partie métallique susceptible de blesser un occupant est évitée.

La figure 1 est une vue en coupe longitudinale d'un dispositif générateur de gaz hybride selon l'invention.

La figure 2 est une vue en coupe longitudinale partielle agrandie du dispositif représenté à la figure 1.

La figure 3 est une vue en coupe transversale d'un premier chargement pyrotechnique pouvant être logé dans l'élément flexible.

La figure 4 est une vue en coupe transversale d'un deuxième chargement pyrotechnique pouvant être logé dans l'élément flexible.

La figure 5 est une vue en coupe transversale d'un troisième chargement pyrotechnique pouvant être logé dans l'élément flexible.

La figure 6 est une vue en coupe transversale d'un autre chargement pyrotechnique pouvant être logé dans l'élément flexible.

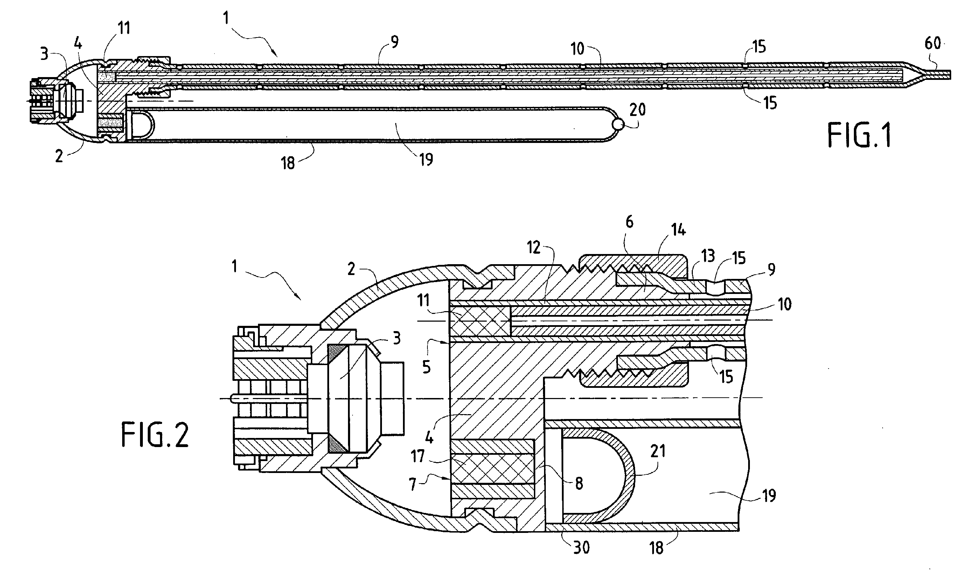

En se référant aux figures 1 et 2, on observe qu'un dispositif 1 générateur de gaz hybride selon l'invention est réalisé à partir d'un corps 2 présentant, d'une part, une première extrémité ouverte par laquelle un allumeur 3 électro-pyrotechnique est inséré puis fixé par soudure, et d'autre part, une seconde extrémité ouverte de plus grand diamètre par laquelle une bague 4 est introduite puis fixée par sertissage. Plus précisément, cette bague 4 possède, d'une part, un premier canal 5 qui la traverse sur toute sa longueur et qui est prolongé par un nez conique 6, et d'autre part, un second canal 7 creusé sur pratiquement toute sa longueur de façon à ne laisser qu'une extrémité pleine 8 de faible épaisseur pouvant jouer le rôle en fonctionnement d'un opercule frangible.

Le premier canal 5 est destiné à accueillir un chargement pyrotechnique qui est lui-même intégré dans un tube 9 souple en matériau thermoplastique. Plus précisément, le chargement pyrotechnique est réalisé sous la forme d'un bloc 10 cylindrique possédant, d'une part, une extrémité amont placée au contact d'une première charge relais 11, et d'autre part, une extrémité aval, une gaine 12 souple thermorétractée enserrant le tout. L'extrémité amont du chargement pyrotechnique ainsi confiné est insérée dans le premier canal 5 après avoir traversée le nez conique 6. Le tube 9 possède, d'une part, une extrémité amont 13 qui est emmanchée sur le nez conique 6 de la bague 4 et sur laquelle est rapporté un collier 14 fixé par vissage dans ladite bague 4, et d'autre part, une extrémité aval qui est emboutie et qui permet, après soudure, de constituer un bouchon étanche 60. Le tube 9 comporte également des orifices de sortie 15 de gaz qui sont régulièrement répartis sur sa circonférence et sur sa longueur. Une seconde charge relais 17 est placée dans le second canal 7 de façon à être au contact de l'extrémité pleine 8 de la bague 4.

Un réservoir 18 de gaz 19 sous pression est réalisé à partir d'un corps métallique comprenant, d'une part, une extrémité aval 30 ouverte, et d'autre part, une extrémité amont présentant un orifice de remplissage de gaz 19 obturé par un bouchon 20 fixé par soudure. Plus précisément, une pièce métallique 21 cylindrique dotée d'un passage central (non représenté) formant une tuyère interne est introduite dans le réservoir 18 et est emmanchée en force à proximité de l'extrémité aval 30 dudit réservoir 18. Le réservoir 18 muni de la pièce métallique 21 est finalement fixé par soudure à la bague 4 de façon à ce que l'extrémité aval 30 dudit réservoir 18 soit située en vis-à-vis de l'extrémité pleine 8 de ladite bague 4.

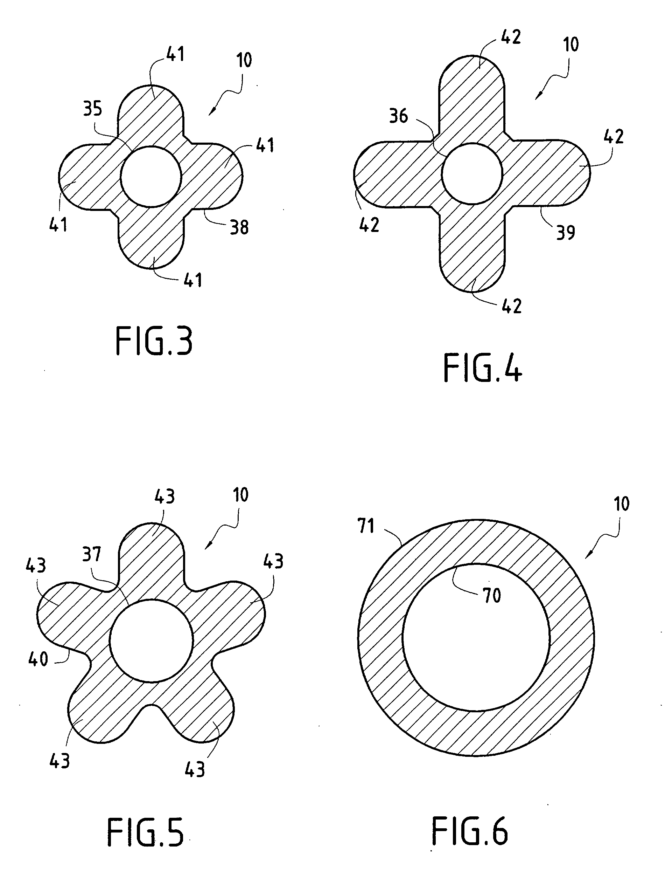

Aux figures 3 à 5 sont représentés trois exemples de chargement pyrotechnique pouvant former le bloc 10. Dans ces trois cas, le bloc 10 possède, d'une part, un canal central 35, 36, 37 ayant un diamètre compris entre 0.9 et 1,5 millimètres, et d'autre part, une paroi latérale 38, 39, 40 munie sur toute sa longueur de protubérances 41, 42, 43. A la figure 6, on observe que le bloc 10 peut également être réalisé sous la forme d'un tube possédant une paroi latérale 71 et un canal central 70. Le bloc 10 est, dans tous les cas, avantageusement constitué par un propergol composite comprenant une charge à base de perchlorate d'ammonium et de nitrate de sodium et un liant inerte.

En cas de choc nécessitant le gonflage du coussin de protection pour assurer la protection de l'occupant, le dispositif 1 fonctionne de la manière suivante. L'allumeur 3 électro-pyrotechnique assure l'allumage des deux charges relais 11 et 17. La charge relais 11 provoque très rapidement l'initiation en combustion du bloc 10 qui génère en quelques millisecondes une importante quantité de gaz pouvant s'échapper par les orifices de sortie 15. Finalement, le coussin de protection est totalement gonflé dans une période de temps n'excédant pas 30 millisecondes.

Après que le bloc 10 a fini de brûler, la charge relais 17 force l'extrémité pleine 8 de bague 4 à se fracturer et le gaz 19 sous pression contenu dans le réservoir 18 peut s'échapper lentement par le passage central étroit de la pièce métallique 21, puis traverser le second canal 7, le corps 2 et finalement repartir en sens opposé pour pénétrer dans le tube 9 désormais vide. Ce gaz 19 est alors évacué par les orifices de sortie 15 et permet de maintenir le coussin de protection totalement gonflé durant une période de temps de l'ordre d'une dizaine de secondes. Il est possible d'augmenter ou de réduire cette période de temps en faisant varier le niveau de pression et le volume du gaz 19 dans le réservoir 18 ou encore en modifiant le diamètre du passage central de la pièce métallique 21.

## Revendications

1. Dispositif (1) générateur de gaz hybride utilisé en sécurité automobile pour gonfler au moins un coussin de protection latéral, **caractérisé en ce qu'**il comprend :
- un élément flexible (9) contenant un chargement pyrotechnique (10) et possédant une extrémité amont (13) et une extrémité aval,
- un réservoir (18) de gaz (19) sous pression présentant une extrémité amont et une extrémité aval (30),
- un allumeur (3) électro-pyrotechnique logé dans un corps (2) au voisinage de l'extrémité amont (13) de l'élément flexible et de l'extrémité aval (30) du réservoir,
- ledit allumeur étant apte en fonctionnement à provoquer, d'une part, l'initiation en combustion du chargement pyrotechnique contenu dans l'élément flexible, et d'autre part, la libération du gaz sous pression contenu dans le réservoir.

2. Dispositif (1) selon la revendication 1, **caractérisé en ce que** le chargement pyrotechnique (10) contenu dans l'élément flexible (9) est apte à générer un volume de gaz suffisant pour gonfler le coussin de protection dans une période de temps inférieure à quarante millisecondes.

3. Dispositif (1) selon l'une quelconque des revendications 1 ou 2, **caractérisé en ce qu'**en fonctionnement, le gaz (19) sous pression contenu dans le réservoir (18) est libéré de façon à maintenir le coussin de protection gonflé durant une période de temps de l'ordre de plusieurs secondes.

4. Dispositif (1) selon l'une quelconque des revendications précédentes, **caractérisé en ce que** le chargement pyrotechnique contenu dans l'élément flexible (9) est réalisé sous la forme d'un bloc (10) cylindrique muni d'un canal central (35).

5. Dispositif (1) selon l'une quelconque des revendications précédentes, **caractérisé en ce que** le chargement pyrotechnique (10) contenu dans l'élément flexible (9) est constitué par un propergol composite comprenant une charge à base de perchlorate d'ammonium et de nitrate de sodium et un liant inerte.

6. Dispositif (1) selon l'une quelconque des revendications précédentes, **caractérisé en ce qu'**une gaine (12) souple thermorétractée enserre et confine le chargement pyrotechnique (10) contenu dans l'élément flexible (8).

7. Dispositif (1) selon la revendication 1, **caractérisé en ce que** l'allumeur (50) provoque l'initiation en combustion du chargement pyrotechnique (10) contenu dans l'élément flexible (9) et la libération du gaz (19) sous pression contenu dans le réservoir (18) au moyen de charges relais (11, 15).

8. Dispositif (1) selon l'une quelconque des revendications précédentes, **caractérisé en ce que** l'élément flexible est réalisé à l'aide d'un tube (9) souple en matériau thermoplastique muni d'orifices de sortie (15) régulièrement répartis sur sa circonférence et sur sa longueur.

9. Dispositif (1) selon la revendication 1, **caractérisé en ce que** l'extrémité amont (13) de l'élément flexible (9) et l'extrémité aval (30) du réservoir (18) sont rattachées à une bague (4) elle-même fixée dans le corps (2).

10. Dispositif (1) selon la revendication 1, **caractérisé en ce qu'**il est conçu pour que, après combustion du chargement pyrotechnique (10), le gaz (19) s'échappe tout d'abord du réservoir (18) pour traverser le corps (2) puis parte en un sens sensiblement opposé pour traverser l'élément flexible (9).
